# EUROPEAN PATENT APPLICATION

(11) **EP 2 169 217 A1**
(43) Date of publication of application: **31.03.2010**
(21) Application number: 08736730.6
(22) Date of filing: 27.02.2008
(51) Int. Cl.: F03D 1/06

(54) **WIND GENERATOR BLADE**

(30) Priority: 28.02.2007 ES 200700535
(71) Applicant: Gamesa Innovation&technology, S.L., 31013 Pamplona (ES)
(72) Inventor: GARCÍA ANDUJAR, Juan Carlos, E-31013 Pamplona (ES); MATESANZ GIL, Álvaro, E-31013 Pamplona (ES); BASURTO RIVAS, Maite, E-48170 Zamudio (ES); RODRIGUEZ MARTIN, Manuel, E-31013 Pamplona (ES)
(86) International application number: PCT/ES2008/070032
(87) International publication number: WO 2008/104629

(57) **Abstract**

Blade (1) extending along a geometric axis (1g*XY*/1g*YZ*) from a root (111*XY*/111*YZ*) where the blade (1) is joined to the rotor (2) to a tip (122*XY*/122*YZ*). The blade has in a projection on a side/front plane *XY*/*YZ* a side/front root portion (11*XY*/11 *YZ*) extending from the side/front root (111*XY*/111*YZ*) to a first intermediate side/front point (112*XY*/112*YZ*); a side/front tip portion (12*XY*/12*YZ*) extending from a second intermediate side/front point (121*XY*/121 *YZ*) to the side/front tip (122*XY*/122*YZ*). The side root portion (11*XY*) forms an acute angle α1 with the axis ***y*** in the side root (111*XY*), 0°≤ α1≤ 10° and the side tip portion (12*XY*) forms an acute angle α2 with the axis ***y*** in the second intermediate side point (121*XY*), 0°≤ α2≤ 10°. The front root portion (11 *YZ*) forms an acute angle β1 with the front pitch axis (1 p YZ) in the front root (111 *YZ*), -10°≤ β1≤ 10° and the front tip portion (12*YZ*) forms an acute angle β2 with the front pitch axis (1p*YZ*) in the second intermediate front point (121 *YZ*), 0°≤ β2≤ 10°.

## Description

### Field of the invention

The invention refers to blades having a non-straight axis used in wind turbines.

### Prior art

Different proposals to improve wind turbines performance by using a non-straight blade axis are known in the art. For instance:
EP 1 019 631, where blades are curved towards the wind, no conicity being used. Said document describes a front rotor wind turbine including a tower supporting a housing having a substantially horizontal main shaft of a wind rotor, comprising a hub and three blades extending from the hub, said blades being built as aerodynamic profile elements. The blades extend from a safe or transitional area in the hub towards a tip area at some distance in front of the hub plane. The blades, which may be bent by wind pressure, extend away from hub plane according to a forward bending, at least along one exterior third of the blade.
EP 1 596 063 where blades are curved towards the wind and some conicity is furthermore used.
US 2006/0067828 where blades are curved in the rotor plane, so that the tip of the blade is bent backwards and the intermediate area is bent forward so as to improve aerolastic blade performance.
These inventions define non-straight blade axis set improvements in the wind turbine aerodynamics. However, mass loads owed to the blade weight are of great importance in current wind turbines (rotors larger than 50 meters in diameter). Particularly, blades having non-straight axis give rise to high torque or torsion moment on the pitch mechanism, owed to the blade weight itself.

### Description of the invention

A plurality of definitions on features of blades of the present invention are included below:
- geometric axis or blade axis: directrix from which a shape to generate the blade is determined;
- pitch axis or rotating axis: axis around which the blade rotates when the pitch angle is modified;
- blade rotating system moment owed to the weight: moment generated by the blade weight around the rotating axis; said moment may vary depending on the blade azimuth angle and on the blade axis deformation caused by inertial forces and aerodynamic forces;
- rotating system average moment: moment average value throughout blade lifespan; by reducing said average moment and, specially by reducing amplitude in the fluctuation value of the moment between two extreme values, fatigue or stress on the rotating system is reduced.

Deflection provoked by the wind increases in blades in large rotors (circa 50m in diameter). Bent blades as known in the state of the art have been developing to avoid that the blade tip contact the tower. Said bent blade geometry implies that the mass centre CDM in a blade stacking as known in the art moves apart from pitch axis. Also, an increase in blade size reverts in an increase of weight importance. Therefore, mass centre CDM location with respect to the pitch axis becomes a designing criteria when calculating a pitch system, given that the torque or torsion moment generated by the blade weight when the blade is being oriented Mₚₜᵤᵣₙ, increases when the coning or prebending and weight are enlarged.

The present invention defines a blade having a shape which enhances aerodynamic performance once loads acting under standard operation of the blade deform said blade structure. The present invention also relates to a method to design such a blade by locating the mass centre CDM in a selected area, thus enlarging lifespan of the blade as well as of the pitch system by diminishing the torque or torsion moment generated by the blade weight when the blade is being oriented Mₚₜᵤₘ.

A first aspect of the invention refers to a process as claimed in claim 1.

A second aspect of the invention refers to a blade as claimed in claim 3.

### Brief description of the drawings

A series of drawings will very briefly be described below which aid in understanding the invention better and are expressly related to an embodiment of said invention which is set forth as a non-limiting example thereof.
Figure 1 is a flow chart showing the process of the invention.
Figures 2A and 2B are side views of a wind generator showing blades of the invention.
Figure 3 is a front view of a wind generator showing a blade of the invention.

### Description of a preferred embodiment of the invention

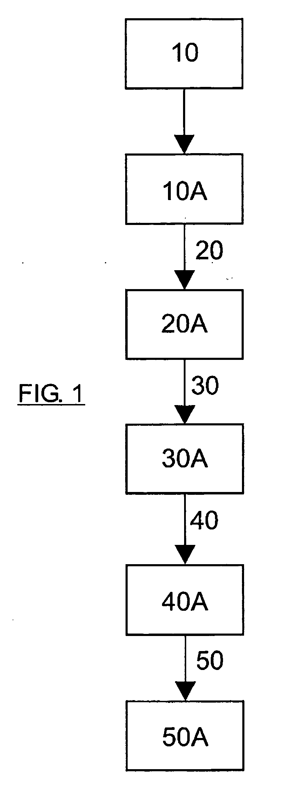

The invention refers to a process shown in figure 1 to constitute a blade for wind turbines for diminishing a torque or torsion moment in a root joint between the blade (1) and a rotor (2) characterized by comprising:
a) a pre-processing (10) for defining a blade by a plurality of input parameters selected from longitude, materials, mass, mass distribution along the blade, admissible deformation parameters and admissible solicitations to obtain an initial blade (10A);
b) a first iteration (20) by stacking aerodynamic profiles having the initial blade (10A) under no load, so as to locate a blade (1) mass centre CDM in a selected position and to obtain a no-load geometry blade (20A);
c) a standard load definition (30) for defining working operation conditions by a plurality of external factors selected from most frequent wind speeds and angular speed Ω so as to estimate displacement of the blade (1) mass centre CDM and to obtain a standard-load blade (30A); said external factors may also be based on estimations or measurements of the corresponding magnitudes;
d) a second iteration (40) by staking aerodynamic profiles having the standard-load blade (30A) turning at a working operation speed so as to approximate the blade (1) mass centre CDM to a pitch axis (1p*XY*/1P*YZ*) to obtain an operative blade (40A).

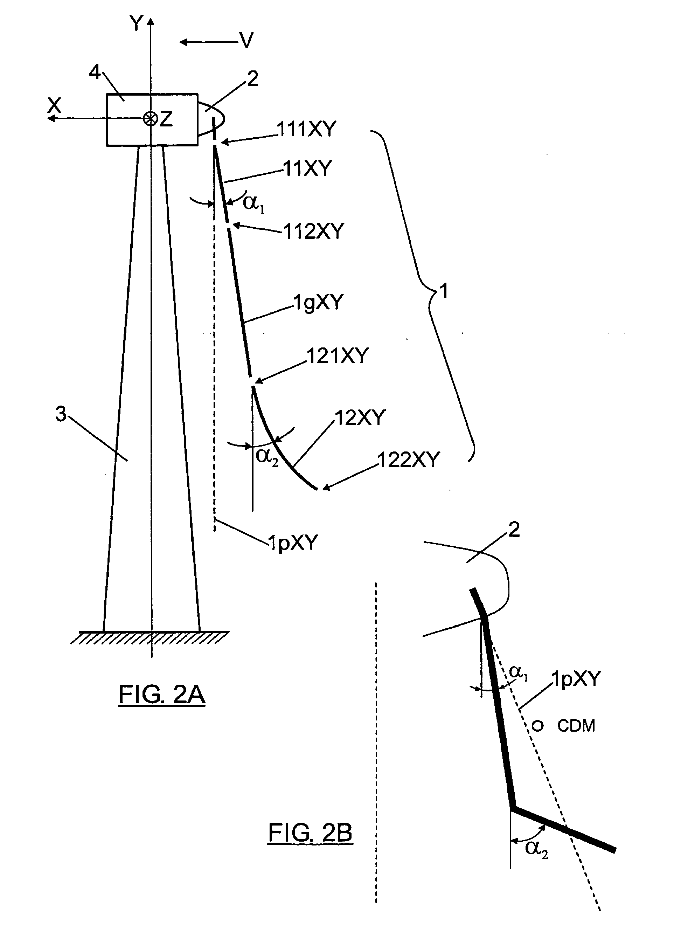

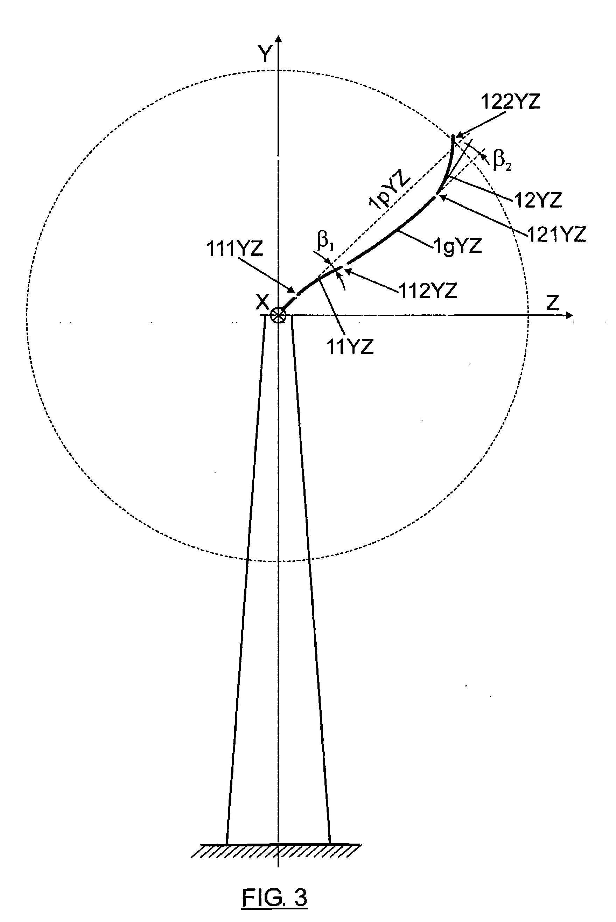

As figures 2 and 3 show, the invention also refers to a blade (1) for wind turbines having:
a reference system having three orthogonal axis ***x*, *y*, *z*** where:
   a rotor (2) first axis ***x*** is parallel to the rotor (2) angular speed Ω, a positive direction along said first axis ***x*** being defined by a wind resultant V on the rotor (2);
   a tower (3) second axis ***y*** defining a wind turbine turning axis to orient the rotor (2) with respect to a wind direction, also known as yaw axis, the second axis ***y*** being perpendicular to the first axis ***x***, a positive direction along said second axis ***y**,* being defined from a tower (3) base (30) to a nacelle (4);
   a ground third axis ***z*** perpendicular to the first axis ***x*** and to the second axis ***y***; the first axis ***x***, the second axis ***y*** and the third axis ***z*** form a direct reference system having an origin in the nacelle (4).
The blade (1):
extends along a geometric axis (1g*XY*/1g*YZ*): from a root (111*XY,* 111 *YZ*) where the blade (1) is joined to the rotor (2); to a tip (122*XY*, *122YZ*);
has a pitch axis (1p*XY*/1p*YZ*) to orient the blade (1) with respect to a wind direction and to modify a blade (1) pitch angle;
and the blade (1) is **characterized in that** comprises in a projection on a side plane *XY*:
a side root portion (11*XY*) extending:
   from the side root (111*XY*);
   to a first intermediate side point (112*XY*);
a side tip portion (12*XY*) extending:
   from a second intermediate side point (121*XY*);
   to the side tip (122*XY*);
where:
the side root portion (11*XY*) forms an acute angle α1 with the axis ***y*** in the side root (111*XY*), 0°≤ α1≤ 10°;
the side tip portion (12*XY*) forms an acute angle α2 with the axis ***y*** in the second intermediate side point (121*XY*), 0°≤ α2≤ 10°;
to approximate a blade (1) mass centre CDM to the:
pitch axis (1p*XY*/1p*YZ*) to diminish a blade (1) turning torque or torsion moment Mₚₜᵤᵣₙ around the pitch axis (1p*XY*/1p*YZ*);
axis ***z*** to diminish a nacelle (4) tilt torque or torsion moment M_{znacelle} and to diminish a blade (1) cantilever torque or torsion moment M_{zroot}.

The first intermediate side point (112*XY*) and the second intermediate side point (121*XY*) in the blade of the invention may be coincident.

Also, a first projection of a side portion (11*XY*, 12*XY*) on a plane *XY,* that is, a portion selected from a side root portion (11*XY*), a side tip portion (12*XY*) and combinations thereof may be selected from straight and curved.

Furthermore, the blade (1) of the invention may comprise in a projection on a front plane *YZ*:
a front root portion (11 *YZ*) extending:
   from the front root (111 *YZ*);
   to a first intermediate front point (112*YZ*);
a front tip portion (12*YZ*) extending:
   from a second intermediate front point (121 *YZ*);
   to the front tip (122*YZ*);
where:
the front root portion (11 *YZ*) forms an acute angle β1 with the front pitch axis (1p*YZ*) in the front root (111 *YZ*), -10°≤ β1≤ 10°;
the front tip portion (12*YZ*) forms an acute angle β2 with the front pitch axis (1p*YZ*) in the second intermediate front point (121 *YZ*), 0°≤ β2≤ 10°;
to approximate a blade (1) mass centre CDM to the:
pitch axis (1p*XY*/1p*YZ*) to diminish a blade (1) turning torque or torsion moment Mₚₜᵤᵣₙ around the pitch axis (1 p*XY*/1p*YZ*);
axis ***x*** to diminish a nacelle (4) tilt torque or torsion moment M_{znacelle} and to diminish a blade (1) cantilever torque or torsion moment Mₓᵣₒₒₜ.

Similarly, the first intermediate front point (112*YZ*) and the second intermediate front point (121 *YZ*) may be coincident.

Additionally, a second projection of a front portion (11 *YZ,* 12*YZ*) on a plane *YZ*, that is, a portion selected from a front root portion (11 *YZ*), a front tip portion (12*YZ*) and combinations thereof is selected from straight and curved.

## Claims

1. A process to constitute a blade for wind turbines for diminishing a torsion moment in a root joint between the blade (1) and a rotor (2) **characterized by** comprising:
a) a pre-processing (10) for defining a blade by a plurality of input parameters selected from longitude, materials, mass, mass distribution along the blade, admissible deformation parameters and admissible solicitations to obtain an initial blade (10A);
b) a first iteration (20) by stacking aerodynamic profiles having the initial blade (10A) under no load, so as to locate a blade (1) mass centre CDM in a selected position and to obtain a no-load geometry blade (20A);
c) a standard load definition (30) for defining working operation conditions by a plurality of external factors selected from most frequent wind speeds and angular speed Ω so as to estimate displacement of the blade (1) mass centre CDM and to obtain a standard-load blade (30A);
d) a second iteration (40) by staking aerodynamic profiles having the standard-load blade (30A) turning at a working operation speed so as to approximate the blade (1) mass centre CDM to a pitch axis (1p*XY*/1p*YZ*) to obtain an operative blade (40A).

2. The process of claim 1 **characterized by** further comprising:
e) a third iteration (50) on the operative blade (40A) to ensure that the blade is returned to flag position in an event of failure of the pitch mechanism so as to obtain a passive safe blade (50A).

3. A blade (1) for wind turbines having:
a reference system having three orthogonal axis ***x*, *y***, ***z*** where:
a rotor (2) first axis ***x*** is parallel to the rotor (2) angular speed Ω, a positive direction along said first axis ***x*** being defined by a wind resultant V on the rotor (2);
a tower (3) second axis ***y*** defining a wind turbine turning axis to orient the rotor (2) with respect to a wind direction, the second axis ***y*** being perpendicular to the first axis ***x***, a positive direction along said second axis ***y***, being defined from a tower (3) base (30) to a nacelle (4);
a ground third axis ***z*** perpendicular to the first axis ***x*** and to the second axis ***y***; the first axis ***x***, the second axis ***y*** and the third axis ***z*** form a direct reference system having an origin in the nacelle (4);
wherein the blade (1):
extends along a geometric axis (1g*XY*/1g*YZ*):
from a root (111*XY*, 111 *YZ*) where the blade (1) is joined to the rotor (2);
to a tip (122*XY*, *122YZ*);
has a pitch axis (1p*XY*/1p*YZ*) to orient the blade (1) with respect to a wind direction and to modify a blade (1) pitch angle;
**characterized in that** the blade (1) comprises in a projection on a side plane *XY*:
a side root portion (11*XY*) extending:
from the side root (111*XY*);
to a first intermediate side point (112*XY*);
a side tip portion (12*XY*) extending:
from a second intermediate side point (121*XY*);
to the side tip (122*XY*);
where:
the side root portion (11*XY*) forms an acute angle α1 with the axis ***y*** in the side root (111*XY*), 0°≤ α1≤ 10°;
the side tip portion (12*XY*) forms an acute angle α2 with the axis ***y*** in the second intermediate side point (121*XY*), 0°≤ α2≤ 10°;
to approximate a blade (1) mass centre CDM to the: pitch axis (1p*XY*/1p*YZ*) to diminish a blade (1) turning torsion moment Mₚₜᵤᵣₙ around the pitch axis (1p*XY*/1p*YZ*); axis z to diminish a nacelle (4) tilt torsion moment M_{znacelle} and to diminish a blade (1) cantilever torsion moment M_{zroot}.

4. The blade of claim 3 **characterized in that** the first intermediate side point (112*XY*) and the second intermediate side point (121*XY*) are coincident.

5. The blade of any of claims 3-4 **characterized in that** a portion selected from a side root portion (11*XY*), a side tip portion (12*XY*) and combinations thereof is selected from straight and curved.

6. The blade of any of claims 3-5 **characterized in that** the blade (1) comprises in a projection on a front plane YZ:
a front root portion (11 YZ) extending:
from the front root (111 *YZ*);
to a first intermediate front point (112*YZ*);
a front tip portion (12*YZ*) extending:
from a second intermediate front point (121 *YZ*);
to the front tip (122 *YZ*);
where:
the front root portion (11 *YZ*) forms an acute angle β1 with the front pitch axis (1p*YZ*) in the front root (111 *YZ*, -10°≤ β1≤ 10°;
the front tip portion (12*YZ*) forms an acute angle β2 with the front pitch axis (1p*YZ*) in the second intermediate front point (121 *YZ*), 0°≤ β2≤ 10°;
to approximate a blade (1) mass centre CDM to the: pitch axis (1p*XY*/1p*YZ*) to diminish a blade (1) turning torsion moment Mₚₜᵤᵣₙ around the pitch axis (1p*XY*/1p*YZ*); axis x to diminish a nacelle (4) tilt torsion moment M_{znacelle} and to diminish a blade (1) cantilever torsion moment Mₓᵣₒₒₜ.

7. The blade of claim 6 **characterized in that** the first intermediate front point (112*YZ*) and the second intermediate front point (121 *YZ*) are coincident.

8. The blade of any of claims 6-7 **characterized in that** a portion selected from a front root portion (11 *YZ*), a front tip portion (12*YZ*) and combinations thereof is selected from straight and curved.
